(19) Europäisches Patentamt
European Patent Office
Office européen des brevets

(11) **EP 3 339 016 A1**

(12) **EUROPEAN PATENT APPLICATION**
published in accordance with Art. 153(4) EPC

(43) Date of publication:
**27.06.2018 Bulletin 2018/26**

(21) Application number: **16837179.7**

(22) Date of filing: **19.08.2016**

(51) Int Cl.:
*B32B 5/28* [(2006.01)]  *B29C 43/20* [(2006.01)]
*B29C 43/34* [(2006.01)]  *B32B 15/08* [(2006.01)]
*B32B 37/06* [(2006.01)]  *B29K 27/12* [(2006.01)]
*B29K 105/08* [(2006.01)]  *B29L 9/00* [(2006.01)]

(86) International application number:
**PCT/JP2016/074239**

(87) International publication number:
**WO 2017/030190 (23.02.2017 Gazette 2017/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **20.08.2015 JP 2015162453
25.03.2016 JP 2016062561
17.06.2016 JP 2016121231**

(71) Applicant: **Asahi Glass Company, Limited
Tokyo 100-8405 (JP)**

(72) Inventors:
• **HOSODA, Tomoya
Tokyo 100-8405 (JP)**

• **SATO, Takashi
Tokyo 100-8405 (JP)**
• **SASAKI, Toru
Tokyo 100-8405 (JP)**
• **NAKAJIMA, Yoji
Tokyo 100-8405 (JP)**
• **KOTERA, Seigo
Tokyo 100-8405 (JP)**
• **NAKAMURA, Junetsu
Tokyo 100-8405 (JP)**

(74) Representative: **Müller-Boré & Partner
Patentanwälte PartG mbB
Friedenheimer Brücke 21
80639 München (DE)**

(54) **MULTILAYER BASE AND METHOD FOR PRODUCING MOLDED BODY OF SAME**

(57) To provide a method for producing a formed product comprising a fiber-reinforced composite material which is excellent in flame retardancy and chemical resistance and which can be formed into a complicated shape; and a laminated substrate which is used for the production method.

A laminated substrate comprising at least one prepreg layer containing a reinforcing fiber sheet and a resin matrix, and at least one polymer layer containing a fluorinated polymer, wherein at least one interface where the prepreg layer and the polymer layer are in contact with each other is present, and adhesive functional groups are present in the surface of the polymer layer at the interface; and a method for producing a formed product, which comprises forming the above laminated substrate with heating.

Fig. 1

**Description**

TECHNICAL FIELD

The present invention relates to a method for producing a formed product comprising a fiber-reinforced composite material, and a laminated substrate to be used for the production method.

BACKGROUND ART

As a formed product comprising a fiber-reinforced composite material is used for a wide range of applications including transport equipment (such as vehicles (such as automobiles and railway vehicles) and aircraft), building components, electronic equipment, etc., a raw material for forming used for producing a formed product comprising a fiber-reinforced composite material is required to be capable of being formed into a complicated shape such as a concavo-convex shape or a deep drawing shape. However, there are various problems when a raw material for forming is to be formed into a complicated shape.

For example, a raw material for forming comprising a prepreg obtained by impregnating a reinforced fiber sheet comprising long reinforcing fibers with a thermosetting resin, is disposed between dies as a pair having a complicated shape, and the raw material for forming is press-formed with heating and the thermosetting resin is cured at the same time, to produce a formed product.

However, since the reinforced fiber sheet in the prepreg can hardly follow the shape of the dies, in the obtained formed product, at the corner portion of the complicated shape, there may be a disorder of the reinforced fibers, or a pool of a matrix resin in which no reinforcing fibers are present may form. As a result, the mechanical strength of the formed product may be insufficient at the corner portion in some cases.

As a raw material for forming with improved forming properties, for example, the following raw materials for forming are proposed.

(1) A raw material for forming having a thermoplastic resin sheet disposed on one surface of a prepreg (Patent Document 1).
(2) A raw material for forming having a thermoplastic resin sheet disposed between prepregs (Patent Document 2).

PRIOR ART DOCUMENTS

PATENT DOCUMENTS

Patent Document 1: JP-A-6-134903
Patent Document 2: JP-A-2008-230236

DISCLOSURE OF INVENTION

TECHNICAL PROBLEM

However, the raw materials for forming (1) and (2) have problems of insufficient flame retardancy, chemical resistance, etc., since they contain a thermoplastic resin derived from the thermoplastic resin sheet as a part of the matrix resin.

The present invention provides a method for producing a formed product comprising a fiber-reinforced composite material which is excellent in flame retardancy and chemical resistance and which can be formed into a complicated shape; and a laminated substrate which is a raw material for forming to be used for the production method.

SOLUTION TO PROBLEM

The present invention has the following aspects.

[1] A laminated substrate comprising at least one prepreg layer containing a reinforcing fiber sheet and a resin matrix, and at least one polymer layer containing a fluorinated polymer, wherein at least one interface where the prepreg layer and the polymer layer are in contact with each other is present, and adhesive functional groups are present in the surface of the polymer layer at the interface.

[2] The laminated substrate according to [1], wherein the polymer layer contains a fluorinated polymer having adhesive functional groups.

[3] The laminated substrate according to [2], wherein the fluorinated polymer having adhesive functional groups is a fluorinated polymer having at least one type of functional group selected from the group consisting of a carbonyl group-containing group, a hydroxy group, an epoxy group, an amide group, an amino group and an isocyanate group.

[4] The laminated substrate according to [1], wherein the polymer layer is composed of a film of a fluorinated polymer having adhesive functional groups introduced to its surface.

[5] The laminated substrate according to [4], wherein the film is a film having the adhesive functional groups introduced by applying plasma treatment or plasma graft polymerization treatment to the film surface.

[6] The laminated substrate according to any one of [1] to [5], wherein the laminated substrate further has at least one metal layer, at least one interface where the metal layer and the polymer layer are in contact with each other is present, and the adhesive functional groups are present in the surface of the polymer layer at the interface where the metal layer and the polymer layer are in contact with each other.

[7] The laminated substrate according to [6], wherein at least one surface of the laminated substrate is composed of a metal layer.

[8] The laminated substrate according to any one of [1] to [7], wherein the fluorinated polymer has a melting point, and the melting point is from 100 to 325°C.

[9] The laminated substrate according to any one of [1] to [8], wherein the polymer layer has a thickness of at least 10 $\mu$m.

[10] The laminated substrate according to any one of [1] to [9], wherein the resin matrix is a resin matrix containing an uncured curable resin.

[11] The laminated substrate according to any one of [1] to [9], wherein the resin matrix is a resin matrix containing a thermoplastic resin.

[12] A method for producing a formed product, which comprises forming the laminated substrate as defined in any one of [1] to [11] with heating.

[13] The production method according to [12], wherein the laminated substrate has a polymer layer containing a fluorinated polymer having adhesive functional groups, and the forming temperature is at least the melting point of the fluorinated polymer and in a case where the resin matrix contains an uncured curable resin, at least the curing temperature of the curable resin.

[14] The production method according to [12], wherein the laminated substrate has a polymer layer composed of a film of a fluorinated polymer having adhesive functional groups introduced to its surface, and the forming temperature is less than the melting point of the fluorinated polymer and in a case where the resin matrix contains an uncured curable resin, at least the curing temperature of the curable resin.

[15] The production method according to any one of [12] to [14], wherein the peel strength at the interface between a fiber-reinforced resin layer derived from the prepreg layer and the polymer layer in the formed product is at least 5N/cm.

ADVANTAGEOUS EFFECTS OF INVENTION

According to the method for producing a formed product of the present invention, it is possible to produce a formed product comprising a fiber-reinforced composite material which is excellent in flame retardancy and chemical resistance and which can be formed into a complicated shape.

According to the laminated substrate of the present invention, by producing a formed product using it, it is possible to produce a formed product which is excellent in flame retardancy and chemical resistance and which can be formed into a complicated shape.

BRIEF DESCRIPTION OF DRAWINGS

Fig. 1 is a cross sectional view illustrating one example of a laminated substrate of the present invention.
Fig. 2 is a cross sectional view illustrating another example of a laminated substrate of the present invention.
Fig. 3 is a cross sectional view illustrating another example of a laminated substrate of the present invention.
Fig. 4 is a cross sectional view illustrating another example of a laminated substrate of the present invention.
Fig. 5 is a cross sectional view illustrating one example of some of steps in the method for producing a formed product of the present invention.

DESCRIPTION OF EMBODIMENTS

Meaning of the following terms in this specification are as follows.

The "melting point" means a temperature corresponding the maximum value of the melting peak measured by differential scanning calorimetry (DSC) method.

"Melt-formable" means having melt flowability.

"Showing melt-flowability" means that a temperature at which the melt flow rate is from 0.1 to 1,000 g/10 min is present at a temperature higher by at least 20°C than the melting point of the resin under a load of 49N.

The "melt flow rate" means the melt mass flow rate (MFR) as defined in JIS K7210:1999 (ISO 1133:1997).

A "film" is a planer object which is relatively thin, and a "sheet" is a planar object which is relatively thick. However, their thicknesses are not limited, and a "film" may be a planer object having a thickness of a so-called sheet, and a "sheet" may be a planer object having a thickness of a so-called film.

An "acid anhydride group" means a group represented by $-C(=O)-O-C(=O)-$.

A "unit" means a part derived from a monomer formed by polymerization of the monomer. The unit may be a unit formed directly by the polymerization of the monomer or may be a unit having a part of the unit converted to another structure by treating the polymer.

<Laminated substrate>

The laminated substrate of the present invention is to be used for the above-described method for producing a formed product of the present invention.

The laminated substrate of the present invention comprises at least one prepreg layer containing a reinforcing fiber sheet and a resin matrix, and at least one polymer layer containing a fluorinated polymer. Further, at least one interface where the prepreg layer and the polymer layer are in contact with each other is present, and adhesive functional groups are present in the surface of the polymer layer at the interface. The adhesive functional groups in the polymer layer surface at the interface will be described hereinafter.

The laminated substrate of the present invention may further have at least one metal layer, and in such a case, at least one interface where the metal layer and the polymer layer are in contact with each other is present, and the adhesive functional groups are present in the surface of the polymer layer at the interface where the metal layer and the polymer layer are in contact with each other.

Further, a formed product obtained by forming the laminated substrate of the present invention has an interface where a fiber-reinforced resin layer derived from the prepreg layer and the polymer layer are in contact with each other, and in the case of a laminated substrate having a metal layer, a formed product has an interface where the metal layer and the polymer layer are in contact with each other. Physical properties such as the adhesive strength of such an interface are due to the presence of the adhesive functional groups at the interface in the laminated substrate. Hereinafter, physical properties such as the adhesive strength of the interface mean physical properties of the interface in the formed product, unless otherwise specified.

The laminated substrate of the present invention is preferably one having at least one prepreg sheet to be the prepreg layer and at least one film of a fluorinated polymer to be the polymer layer laminated. The laminated substrate having a metal layer is preferably produced by further laminating at least one metal film. However, formation of the layers in the laminated substrate is not limited to use of a film or a sheet.

For example, a layer composed of a fluorinated polymer powder is formed on the surface of a prepreg sheet or a metal film to form a layer composed of the fluorinated polymer powder. The fluorinated polymer powder layer may be the polymer layer in the laminated substrate, or may be melted at the time of forming the laminated substrate to be a homogeneous polymer layer. Otherwise, the fluorinated polymer powder layer may be melted at the time of producing the laminated substrate to obtain a laminated substrate having a homogeneous polymer layer. Further, a coating liquid containing a fluorinated polymer may be applied to the surface of a prepreg sheet or a metal film to form a coating film, and the solvent is removed from the coating film to form the polymer layer. Otherwise, for example, a reinforcing fiber sheet may be overlaid on the film of the fluorinated polymer, and the reinforcing fiber sheet is impregnated with a resin for matrix to form a prepreg layer.

The respective layers in the laminated substrate of the present invention may be bonded with an adhesive strength to a certain extent, or may not be bonded. The laminated substrate in which the layers are bonded is produced by bonding the raw materials (such as a film or a sheet) constituting the layers by heating or pressurizing. However, in a case where the resin matrix is a curable resin, the bonding procedure is conducted under conditions where the curable resin is not cured. In a case where a film or a sheet is used as the raw materials constituting the layers, it is preferred that a stack of the constituting raw materials is heated or pressurized between dies to bond the constituting raw materials.

A laminated substrate in which the respective layers are not bonded is obtained only by piling the constituting raw materials, and such a laminated substrate may be subjected to forming as it is. Further, the constituting raw materials may be piled immediately before forming the laminated substrate, to obtain the laminated substrate.

The numbers of the prepreg layer and the polymer layer in the laminated substrate of the present invention are respectively at least 1, and may be properly set depending upon e.g. the properties required for the formed product.

The order of stacking the prepreg layer and the polymer layer may also be properly set depending upon e.g. the properties required for the formed product.

The thickness of the laminated substrate of the present invention may also be properly set depending upon e.g. the properties required for the formed product.

The laminated substrate of the present invention is preferably a laminated substrate of which at least one surface is composed of a polymer layer, and in the case of a laminated substrate having a metal layer, it is preferably a laminated substrate of which at least one surface is a metal layer.

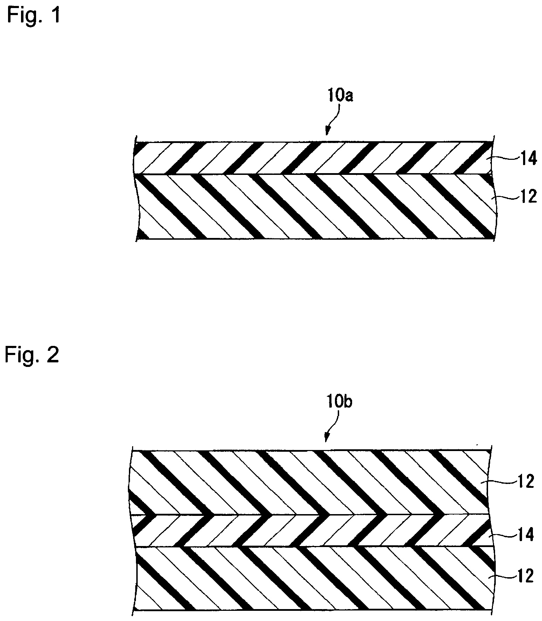

Fig. 1 is a cross sectional view illustrating one example of the laminated substrate of the present invention. The laminated substrate 10a comprises a prepreg layer 12 and a polymer layer 14 adjacent to the prepreg layer 12.

Fig. 2 is a cross sectional view illustrating another example of the laminated substrate of the present invention. The laminated substrate 10b comprises two prepreg layers 12 and a polymer layer 14 disposed between the prepreg layers 12.

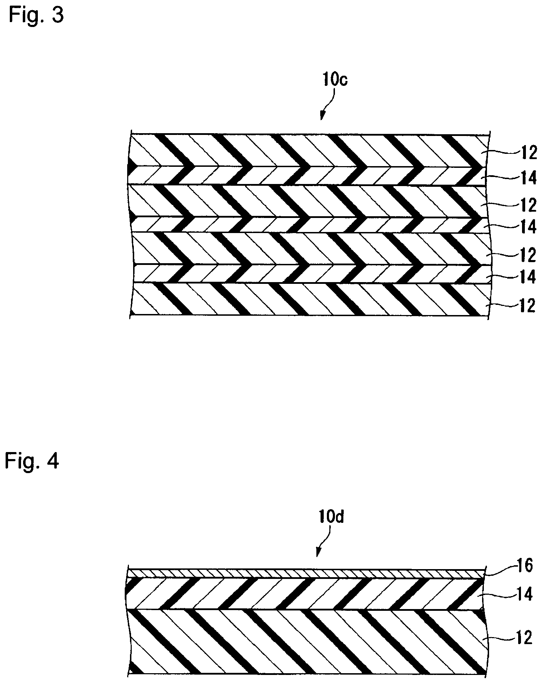

Fig. 3 is a cross sectional view illustrating another example of the laminated substrate of the present invention. The laminated substrate 10c comprises four prepreg layers 12 and three polymer layers 14 disposed between the prepreg layers 12 alternately.

Fig. 4 is a cross sectional view illustrating another example of the laminated substrate of the present invention. The laminated substrate 10d comprises a prepreg layer 12, a polymer layer 14 adjacent to the prepreg layer 12, and a metal layer 16 adjacent to the polymer layer 14 and not adjacent to the prepreg layer 12.

(Prepreg layer)

The prepreg layer is a layer comprising a prepreg. The thickness of one prepreg layer is usually from 1 to 1,000 $\mu$m, preferably from 10 to 500 $\mu$m.

The prepreg layer is preferably a layer composed of a prepreg sheet comprising a reinforcing fiber sheet and a resin matrix. One prepreg layer may be a layer comprising one prepreg sheet or may be a layer comprising a plurality of prepreg sheets.

The prepreg sheet is produced by a known method.

Reinforcing fiber sheet:

The reinforcing fiber sheet may, for example, be a reinforcing fiber bundle comprising a plurality of reinforcing fibers, a cloth obtained by weaving the reinforcing fiber bundle, a unidirectional reinforcing fiber bundle having a plurality of reinforcing fibers stretch-assembled in one direction, a unidirectional cloth constituted by the unidirectional reinforcing fiber bundle, a combination thereof, or a pile of a plurality of the reinforcing fiber bundles.

The reinforcing fibers are preferably continuous long fibers having a length of at least 10 mm. The reinforcing fibers are not necessarily continuous in overall length in the lengthwise direction or in overall width in the width direction of the reinforcing fiber sheet and may be split in the middle.

The reinforcing fibers may, for example, be inorganic fibers, metal fibers or organic fibers.

The inorganic fibers may, for example, be carbon fibers, graphite fibers, glass fibers, silicon carbide fibers, silicon nitride fibers, alumina fibers, silicon carbide fibers, or boron fibers.

The metal fibers may, for example, be aluminum fibers, brass fibers, or stainless steel fibers.

The organic fibers may, for example, be aromatic polyamide fibers, polyaramide fibers, poly(p-phenylene benzoxazole) (PBO) fibers, polyphenylene sulfide fibers, polyester fibers, acrylic fibers, nylon fibers, or polyethylene fibers.

The reinforcing fibers may be surface-treated.

The reinforcing fibers may be used alone or in combination of two or more.

The reinforcing fibers are preferably carbon fibers, which have a low specific gravity and has high strength and a high elastic modulus.

Resin for matrix:

The resin constituting the resin matrix may, for example, be a curable resin (such as a thermosetting resin or a photocurable resin) or a thermoplastic resin. The resin is, in view of the adhesion between the polymer layer and the fiber-reinforced resin layer derived from the prepreg layer in the formed product, preferably a curable resin, and in view of the productivity of the formed product, particularly preferably a thermosetting resin.

The thermosetting resin contains a crosslinkable resin and a thermal polymerization initiator. The thermosetting resin may contain other resin, additives, etc., within a range not to impair the effects of the present invention.

The crosslinkable resin may, for example, be an epoxy resin, an unsaturated polyester resin, a vinyl ester resin, a phenol resin, a urea/melamine resin, a polyimide, a bismaleimide resin or a cyanate ester resin.

The thermal polymerization initiator may be known one.

The photocurable resin contains a crosslinkable resin and a photopolymerization initiator. The photocurable resin may contain other resin, additives, etc., within a range not to impair the effects of the present invention.

The crosslinkable resin may, for example, be a vinyl ester resin, an unsaturated polyester resin, an epoxy resin, a spiro orthocarbonate resin or an oxetane resin.

The photopolymerization initiator may be known one.

The thermoplastic resin may contain other resin, additives, etc., within a range not to impair the effects of the present invention.

The thermoplastic resin may be a crystalline resin, an amorphous resin, a thermoplastic elastomer or the like. The crystalline resin may, for example, be a polyester resin (such as polyethylene terephthalate (PET), polybutylene terephthalate (PBT), polytrimethylene terephthalate (PTT), polyethylene naphthalate (PEN) or liquid crystalline polyester), a polyolefin resin (such as polyethylene (PE), polypropylene (PP), polybutyrene, acid-modified polyethylene (m-PE), acid-modified polypropylene (m-PP) or acid-modified polybutyrene), polyoxymethylene (POM), polyamide (PA), a polyarylene sulfide resin (such as polyphenylene sulfide (PPS)), a polyketone (PK), a polyether ketone (PEK), a polyether ether ketone, (PEEK), a polyether ketone ketone (PEKK), a polyether nitrile (PEN) or a liquid crystal polymer (LCP). The amorphous resin may, for example, be a styrene resin (such as polystyrene (PS), acrylonitrile styrene (AS) or acrylonitrile butadiene styrene (ABS)), polycarbonate (PC), polymethyl methacrylate (PMMA), polyvinyl chloride (PVC), non-modified or modified polyphenylene ether (PPE), polyimide (PI), polyamideimide (PAI), polyetherimide (PEI), polysulfone (PSU), polyethersulfone, polyarylate (PAR) or a phenoxy resin. The thermoplastic elastomer may, for example, be a polystyrene elastomer, a polyolefin elastomer, a polyurethane elastomer, a polyester elastomer, a polyamide elastomer, a polybutadiene elastomer, a polyisoprene elastomer or an acrylonitrile elastomer.

The thermoplastic resin may be a fluorinated polymer but is preferably a thermoplastic resin other than a fluorinated polymer. Further, the thermoplastic resin may be a blended resin of a thermoplastic resin other than a fluorinated polymer, and a fluorinated polymer. In such a case, the proportion of the fluorinated polymer in the blended resin is preferably less than 50 mass%, more preferably less than 20 mass%.

(Polymer layer)

The polymer layer is a layer containing a fluorinated polymer. The thickness of one polymer layer is usually from 1 to 1,000 $\mu$m, preferably from 5 to 500 $\mu$m, and with a view to imparting chemical resistance and flame retardancy, preferably at least 10 $\mu$m. It is more preferably from 10 to 500 $\mu$m, further preferably from 10 to 300 $\mu$m.

The fluorinated polymer may be a fluorinated polymer having a melting point or may be a fluorinated polymer having no melting point (for example, a fluorinated elastomer). The polymer layer is preferably a layer composed of a film of a fluorinated polymer in view of the productivity of the laminated substrate, handling efficiency of the laminated substrate, etc. Further, one polymer layer may be a layer composed of one film of a fluorinated polymer or may be a layer composed of a plurality of films of a fluorinated polymer.

The polymer layer may be a homogeneous layer formed of a fluorinated polymer powder or a layer comprising a fluorinated polymer powder, or may be a layer formed from a coating composition containing a fluorinated polymer. Further, the polymer layer may be a cloth (such as a woven fabric or non-woven fabric) formed by using fibers comprising a fluorinated polymer.

At least one polymer layer has at least one surface in contact with the prepreg layer, and adhesive functional groups are present in the surface in contact with the prepreg layer. In a laminated substrate having a metal layer, in addition, at least one polymer layer has at least one surface in contact with the metal layer, and adhesive functional groups are present in the surface in contact with the metal layer.

The polymer layer having adhesive functional groups present at its surface is constituted by a fluorinated polymer having adhesive functional groups or is constituted by a fluorinated polymer film having adhesive functional groups introduced to the film surface. The film having adhesive functional groups introduced is preferably a film obtained by introducing adhesive functional groups to the surface of a film of a fluorinated polymer having no adhesive functional group.

Film of fluorinated polymer:

The film of a fluorinated polymer is preferably a film obtained by forming a material for forming containing a melt-formable fluorinated polymer into a film. The fluorinated polymer in the film is a fluorinated polymer having adhesive functional groups in some cases or a fluorinated polymer having no adhesive functional group in other cases.

The materials constituting the film may contain, in addition to the fluorinated polymer, additives, a resin other than the fluorinated polymer, etc., within a range not to impair the effects of the present invention. The content of the fluorinated polymer in the film is preferably at least 50 mass%, more preferably at least 80 mass% based on the entire materials constituting the film, in view of the adhesion at the interface. The upper limit of the content of the fluorinated polymer is not particularly limited and may be 100 mass%.

The thickness of the film is usually from 1 to 1,000 μm. The thickness of the film is preferably from 10 to 500 μm, particularly preferably from 10 to 200 μm.

The film is preferably produced by using a material for forming containing a fluorinated polymer by a known forming method (such as extrusion or blown-film extrusion).

Film of fluorinated polymer having adhesive functional group introduced to its surface:

Adhesive functional groups can be introduced to the film surface by a surface treatment of a film of a fluorinated polymer. The surface having adhesive functional groups introduced, is one or both sides of the film to be an interface with the prepreg layer or the metal layer. Adhesive functional groups may be introduced to a surface not to be an interface with the prepreg layer or the metal layer. The surface treatment may, for example, be corona discharge treatment, plasma treatment (excluding corona discharge treatment), plasma graft polymerization treatment or wet etching treatment using metal sodium.

The surface treatment is preferably corona discharge treatment, plasma treatment or plasma graft polymerization treatment in that no subsidiary material such as a chemical solution is necessary and an additional step such as washing is unnecessary, and that adhesive functional groups can be introduced efficiently to the film surface and a high effect of improving the adhesion of the film surface is achieved, and is particularly preferably plasma treatment or plasma graft polymerization treatment in that a higher effect of improving the adhesion of the film surface is achieved.

The surface treatment is preferably plasma treatment in that the amount of adhesive functional groups introduced is large. Further, in a case where carbonyl group-containing groups are introduced to the film surface, the surface treatment is preferably plasma treatment. In the plasma treatment, by conducting discharge in an oxygen-containing environment, oxygen radicals and ozone will form and the carbonyl group-containing groups can be introduced to the film surface efficiently.

As the plasma treatment apparatus, a known treatment system may be employed. As known treatment system, one employing e.g. a capacitively coupled electrode method or a corona discharge electrode-plasma jet method has been proposed. In the capacitively coupled electrode method, at least one of electrodes as a pair is covered with a dielectric plate, and a high voltage such as pulses is applied to between electrodes filled with e.g. a rare gas, to form plasma. By the film passing through the plasma as being transported by rolls, the film surface is treated. The film passes in the vicinity of one of the electrodes or in the vicinity of the center of the electrodes, and basically both surfaces of the film are treated. The system of such a type has been known relatively long before and has been applied to the surface treatment of various resins. Since the distance between the electrodes should be several cm or shorter, it is difficult to treat a three-dimensional object or a large-sized object, but it is possible to treat a relatively large area in the case of an object having a film shape or the like.

Usually, by applying plasma treatment to the surface of an object to be treated comprising a resin, a polymer, glass, a metal or the like, the surface of the object to be treated comprising such a material is remarkably hydrophilized in many cases and its adhesion improves. The reason is as follows.

By the action of high energy electrons (at a level of from 1 to 10 eV) generated by atmospheric pressure plasma discharge, the main chain and the side chains of the bond of the surface material (in the case of a metal, the surface oxide layer or oil layer) are dissociated to generate radicals. Further, molecules in the atmospheric gas, e.g. the air and the moisture are dissociated to generate radicals. By the recombination reaction of the two types of radicals, hydrophilic functional groups such as hydroxy groups, carbonyl groups or carboxy groups are formed on the surface of the object to be treated, and as a result, the free energy of the surface of the object to be treated becomes higher, and the object will readily be attached/bonded to another surface.

Depending upon the material of the layer to be bonded, strong adhesion may be achieved at the interface in some cases by introducing basic functional groups such as amide groups or amino groups to be introduced to the film surface, to the film surface. As the surface treatment capable of introducing a wide range of adhesive functional groups represented by basic functional groups to the film surface, such a surface treatment has been known that a monomer having an adhesive functional group to be introduced and an unsaturated double bond is made to be present in the plasma treatment system, and radical species generated in the film surface by irradiation with high energy beam is employed as a trigger for polymerization initiation to graft-polymerize the monomer.

As the surface treatment employing graft polymerization, preferred is plasma graft polymerization treatment in that the amount and the type of adhesive functional groups introduced can be controlled in a wider range by the combination of plasma treatment and surface treatment.

The monomer to be used for the plasma graft polymerization treatment may, for example, be acrylic acid, methacrylic acid, acrylamide, allylamine or glycidyl methacrylate. By surface-treating the material by using such a monomer, it is possible to introduce adhesive functional groups such as carboxy groups, amide groups, amino groups or epoxy groups to the film surface.

Film of fluorinated polymer having adhesive functional groups:

As a film of a fluorinated polymer having adhesive functional groups, preferred is a film produced by forming a fluorinated polymer having adhesive functional groups into a film.

The adhesive functional groups in the fluorinated polymer having adhesive functional groups are preferably functional groups selected from the group consisting of carbonyl group-containing groups, hydroxy groups, epoxy groups, amide groups, amino groups and isocyanate groups.

The adhesive functional groups are preferably present as one or both of terminal groups of the main chain of the fluorinated polymer and pendant groups of the main chain, in view of the adhesion at the interface.

The adhesive functional groups in the fluorinated polymer may be one type or two or more types.

The adhesive functional groups in the fluorinated polymer are preferably carbonyl group-containing groups in view of the adhesion at the interface.

The carbonyl group-containing group may, for example, be a group having a carbonyl group between carbon atoms in a hydrocarbon group, a carbonate group, a carboxy group, a haloformyl group, an alkoxycarbonyl group or an acid anhydride group.

The hydrocarbon group in the group having a carbonyl group between carbon atoms in a hydrocarbon group may, for example, be a $C_{2-8}$ alkylene group. The number of carbon atoms in the alkylene group is the number of carbon atoms not including the carbon atom in the carbonyl group. The alkylene group may be linear or branched.

The haloformyl group is represented by -C(=O)-X (wherein X is a halogen atom). The halogen atom in the haloformyl group may, for example, be a fluorine atom or a chlorine atom and is preferably a fluorine atom. That is, the haloformyl group is preferably a fluoroformyl group (also called a carbonyl fluoride group).

The alkoxy group in the alkoxycarbonyl group may be linear or branched, and is preferably a $C_{1-8}$ alkoxy group, particularly preferably a methoxy group or an ethoxy group.

The content of the adhesive functional groups in the fluorinated polymer is preferably from 10 to 60,000, more preferably from 100 to 50,000, further preferably from 100 to 10,000, particularly preferably from 300 to 5,000 groups per $1 \times 10^6$ carbon atoms in the main chain of the fluorinated polymer. When the content of the adhesive functional groups is at least the lower limit value of the above range, more excellent adhesion at the interface will be obtained. When the content of the adhesive functional groups is at most the upper limit value of the above range, excellent adhesion at the interface will be obtained even when the temperature at which the laminated substrate is formed is lowered.

The content of the adhesive functional groups may be measured by e.g. nuclear magnetic resonance (NMR) analysis or infrared absorption spectrum analysis. For example, the proportion (mol%) of units having adhesive functional groups based on all the units constituting the a fluorinated resin (A) is determined by e.g. infrared absorption spectrum analysis as disclosed in e.g. JP-A-2007-314720, and the content of the adhesive functional groups can be calculated from the proportion.

(Fluorinated polymer)

The fluorinated polymer in the present invention is not limited to a fluorinated polymer having the following melting point and includes a fluorinated polymer having no melting point such as a fluorinated elastomer and a fluorinated polymer having a melting point out of the following range. The fluorinated polymer in the present invention is preferably a fluorinated polymer having the following melting point.

The fluorinated elastomer is preferably an elastomer containing units based on at least one monomer selected from tetrafluoroethylene, hexafluoropropylene, vinylidene fluoride and chlorotrifluoroethylene. Specifically, a tetrafluoroethylene/propylene copolymer as disclosed in e.g. JP-A-05-78539; a vinylidene fluoride/hexafluoropropylene copolymer as disclosed in e.g. JP-A-11-124482, a vinylidene fluoride/hexafluoropropylene/tetrafluoroethylene copolymer; or a fluorinated polymer having units based on tetrafluoroethylene and units based on perfluoro(methyl vinyl ether) as disclosed in e.g. 2006-089720, may, for example, be mentioned.

The fluorinated polymer having no melting point or the fluorinated polymer having a melting point out of the following range may, for example, be a tetrafluoroethylene homopolymer or a modified tetrafluoroethylene polymer.

The fluorinated polymer in the present invention is preferably a fluorinated polymer having a melting point of at least 100°C and at most 325°C regardless of whether it has the adhesive functional groups or not. The melting point of the fluorinated polymer is more preferably at least 100°C and at most 260°C, further preferably at least 120°C and at most 220°C. When the melting point of the fluorinated polymer is at least the lower limit value of the above range, the obtainable formed product will be excellent in the heat resistance. When the melting point of the fluorinated polymer is at most the upper limit value of the above range, a general purpose forming apparatus can be used for production of a formed product, and when the resin in the prepreg is a thermosetting resin, excellent adhesion at the interface between the polymer layer and the fiber-reinforced resin layer in the formed product will be achieved.

Hereinafter, a fluorinated polymer means a fluorinated polymer having the above melting point, unless otherwise specified.

When a fluorinated polymer having a relatively low melting point and the resin in the prepreg is a thermosetting resin, even when the temperature at which the laminated substrate is formed is lowered, an excellent adhesion at the interface between the polymer layer and the fiber-reinforced resin layer in the formed product will be achieved. Accordingly, in such a case, the melting point of the fluorinated polymer is preferably at least 120°C and at most 220°C, more preferably at least 120°C and at most 200°C.

The melting point of the fluorinated polymer may be adjusted e.g. by the type and the proportion of the units constituting the fluorinated polymer, the molecular weight of the fluorinated polymer, etc. For example, the higher the proportion of the after-mentioned units (u1), the higher the melting point tends to be.

The fluorinated polymer is preferably a melt-formable fluorinated polymer in view of easy production of the film.

As the melt-formable fluorinated polymer, a known melt-formable fluorinated polymer may be used.

The fluorinated polymer having no adhesive functional group may, for example, be a tetrafluoroethylene/perfluoro(alkyl vinyl ether) copolymer (PFA), a tetrafluoroethylene/hexafluoropropylene copolymer (FEP), an ethylene/tetrafluoroethylene copolymer (ETFE), a polyvinylidene fluoride (PVDF), a polychlorotrifluoroethylene (PCTFE) or an ethylene/chlorotrifluoroethylene copolymer (ECTFE). The fluorinated polymer having no adhesive functional group is preferably a fluorinated polymer having hydrogen atoms bonded to carbon atoms, such as ETFE or PVDF, to which the adhesive functional groups can efficiently be introduced by the surface treatment.

The fluorinated polymer having adhesive functional groups may be the above fluorinated polymer having units having an adhesive functional group or a terminal group having an adhesive functional group. Specifically, it may, for example, be PFA having adhesive functional groups, FEP having adhesive functional groups or ETFE having adhesive functional groups.

The fluorinated polymer is preferably one such that a temperature at which the melt flow rate is from 0.1 to 1,000 g/10 min (preferably from 0.5 to 100 g/10 min, more preferably from 1 to 30 g/10 min, further preferably from 5 to 20 g/10 min) is present at a temperature higher by at least 20°C than the melting point of the fluorinated polymer under a load of 21N. When the melt flow rate is at least the lower limit value of the above range, excellent forming property of the fluorinated polymer will be achieved, and the fluorinated polymer film will be excellent in the surface smoothness and the outer appearance. When the melt flow rate is at most the upper limit value of the above range, the fluorinated polymer film will be excellent in the mechanical strength.

The melt flow rate of the fluorinated polymer at 235°C under a load of 21N is preferably from 0.5 to 100 g/10 min, more preferably from 1 to 50 g/10 min, further preferably from 1 to 30 g/10 min. When the melt flow rate is at most the upper limit value of the above range, the heat resistance tends to improve. When the melt flow rate is at least the lower limit value of the above range, the fluorinated polymer will be excellent in forming property.

The fluorinated polymer in the polymer layer is preferably a fluorinated polymer having adhesive functional groups. By using a fluorinated polymer having adhesive functional groups, the adhesive strength between the polymer layer and the fiber-reinforced resin layer can be further increased.

The fluorinated polymer having adhesive functional groups may be produced e.g. by a method of copolymerizing a monomer having an adhesive functional group at the time of polymerization of the monomer, or a method of polymerizing the monomer using a chain transfer agent or a polymerization initiator which brings about an adhesive functional groups. Particularly, it is preferred to copolymerize a monomer having an adhesive functional group to produce a copolymer having the monomer units and thereby to produce a fluorinated polymer having adhesive functional groups. Such methods may be employed in combination.

The monomer having an adhesive functional group is preferably a monomer having a carbonyl group-containing group, a hydroxy group, an epoxy group, an amide group, an amino group or an isocyanate group. The carbonyl group-containing group is preferably an acid anhydride group or a carboxy group. Specifically, it may, for example, be a monomer having a carboxy group, such as maleic acid, itaconic acid, citraconic acid or undecylenic acid, a monomer having an acid anhydride group, such as itaconic anhydride (hereinafter sometimes referred to simply as "IAH"), citraconic anhydride (hereinafter sometimes referred to simply as "CAH"), 5-norbornene-2,3-dicarboxylic anhydride (hereinafter sometimes referred to simply as "NAH") or maleic anhydride, a hydroxyalkyl vinyl ether or an epoxyalkyl vinyl ether.

The chain transfer agent which brings about adhesive functional groups is preferably a chain transfer agent having a carboxy group, an ester bond, a hydroxy group or the like. Specifically, it may, for example, be acetic acid, acetic anhydride, methyl acetate, ethylene glycol or propylene glycol.

The polymerization initiator which brings about adhesive functional groups is preferably a peroxide polymerization initiator such as peroxy carbonate, diacyl peroxide or peroxyester. Specifically, it may, for example, be di-n-propyl peroxydicarbonate, diisopropyl peroxycarbonate, tert-butylperoxyisopropyl carbonate, bis(4-tert-butylcyclohexyl)peroxydicarbonate or di-2-ethylhexyl peroxydicarbonate.

As the fluorinated polymer having adhesive functional groups derived from the monomer, in view of more excellent adhesion at the interface between the polymer layer and the fiber-reinforced resin layer or the metal layer in the formed product, the following fluorinated polymer A is particularly preferred.

Fluorinated polymer A: a fluorinated polymer having units derived from tetrafluoroethylene (hereinafter sometimes referred to simply as "TFE") or chlorotrifluoroethylene (hereinafter sometimes referred to simply as "CTFE"), units derived from a cyclic hydrocarbon monomer having an acid anhydride group (hereinafter sometimes referred to simply as "acid anhydride monomer") and units derived from a fluorinated monomer (excluding TFE and CTFE).

Hereinafter, units derived from TFE or CTFE will sometimes be referred to simply as "units (u1)", units derived from an acid anhydride monomer as "units (u2)" and units derived from a fluorinated monomer as "units (u3)".

The acid anhydride monomer may, for example, be IAH, CAH, NAH or maleic anhydride. The acid anhydride monomer may be used alone or in combination of two or more.

The acid anhydride monomer is preferably IAH, CAH or NAH. When any one of IAH, CAH and NAH is used, the fluorinated polymer A having an acid anhydride group can readily be produced without using a special polymerization method (see JP-A-11-193312) which is required in a case where maleic anhydride is used.

The acid anhydride monomer is preferably IAH or NAH in view of more excellent adhesion at the interface.

The fluorinated polymer A may contain units of a dicarboxylic acid (such as itaconic acid, citraconic acid, 5-norbornene-2,3-dicarboxylic acid or maleic acid) corresponding to the acid anhydride monomer as a result of hydrolysis of some acid anhydride groups in the units (u2). In a case where the units of the dicarboxylic acid are contained, the content of the units is included in the content of the units (u2).

In a case where the fluorinated polymer A is to be produced, the concentration of the acid anhydride monomer during polymerization is preferably from 0.01 to 5 mol%, more preferably from 0.1 to 3 mol%, further preferably from 0.1 to 2 mol% based on all the monomers. When the concentration of the monomer is within the above range, the polymerization rate will be appropriate. If the concentration of the monomer is too high, the polymerization rate tends to be low.

As the acid anhydride monomer is consumed by polymerization, it is preferably supplied in an amount corresponding to the amount consumed continuously or intermittently to a polymerization vessel thereby to keep the concentration of the monomer to be within the above range.

The fluorinated monomer constituting the units (u3) is preferably a fluorinated compound having one polymerizable carbon-carbon double bond, such as fluoroolefin (such as vinyl fluoride, vinylidene fluoride, trifluoroethylene, hexafluoropropylene (hereinafter sometimes referred to simply as "HFP") or hexafluoroisobutylene, and excluding TFE), $CF_2=CFOR^{f1}$ (wherein $R^{f1}$ is a $C_{1-10}$ perfluoroalkyl group which may contain an oxygen atom between carbon atoms) (hereinafter sometimes referred to simply as "PAVE"), $CF_2=CFOR^{f2}SO_2X^1$ (wherein $R^{f2}$ is a $C_{1-10}$ perfluoroalkylene group which may contain an oxygen atom between carbon atoms, and $X^1$ is a halogen atom or a hydroxy group), $CF_2=CFOR^{f3}CO_2X^2$ (wherein $R^{f3}$ is a $C_{1-10}$ perfluoroalkylene group which may contain an oxygen atom between carbon atoms, and $X^2$ is a hydrogen atom or a $C_{1-3}$ alkyl group), $CF_2=CF(CF_2)_pOCF=CF_2$ (wherein p is 1 or 2), $CH_2=CX^3(CF_2)_qX^4$ (wherein $X^3$ is a hydrogen atom or a fluorine atom, q is an integer of from 2 to 10, and $X^4$ is a hydrogen atom or a fluorine atom) (hereinafter sometimes referred to simply as "FAE"), a fluorinated monomer having a cyclic structure (such as perfluoro(2,2-dimethyl-1,3-dioxol), 2,2,4-trifluoro-5-trifluoromethoxy-1,3-dioxole or perfluoro(2-methylene-4-methyl-1,3-dioxolane)).

The fluorinated monomer is, in view of forming properties of the fluorinated polymer A, excellent flexibility of the polymer layer, etc., preferably at least one member selected from the group consisting of HFP, PAVE and FAE, more preferably either one or both of FAE and HFP.

PAVE may, for example, be $CF_2=CFOCF_2CF_3$, $CF_2=CFOCF_2CF_2CF_3$, $CF_2=CFOCF_2CF_2CF_2CF_3$ or $CF_2=CFO(CF_2)_8F$, and is preferably $CF_2=CFOCF_2CF_2CF_3$ (hereinafter sometimes referred to simply as "PPVE").

FAE may, for example, be $CH_2=CF(CF_2)_2F$, $CH_2=CF(CF_2)_3F$, $CH_2=CF(CF_2)_4F$, $CH_2=CF(CF_2)_5F$, $CH_2=CF(CF_2)_8F$, $CH_2=CF(CF_2)_2H$, $CH_2=CF(CF_2)_3H$, $CH_2=CF(CF_2)_4H$, $CH_2=CF(CF_2)_5H$, $CH_2=CF(CF_2)_8H$, $CH_2=CH(CF_2)_2F$, $CH_2=CH(CF_2)_3F$, $CH_2=CH(CF_2)_4F$, $CH_2=CH(CF_2)_5F$, $CH_2=CH(CF_2)_6F$, $CH_2=CH(CF_2)_8F$, $CH_2=CH(CF_2)_2H$, $CH_2=CH(CF_2)_3H$, $CH_2=CH(CF_2)_4H$, $CH_2=CH(CF_2)_5H$ or $CH_2=CH(CF_2)_8H$.

FAE may, for example, be $CH_2=CH(CF_2)_{q1}X^4$ (wherein q1 is from 2 to 6, preferably from 2 to 4), more preferably $CH_2=CH(CF_2)_2F$, $CH_2=CH(CF_2)_3F$, $CH_2=CH(CF_2)_4F$, $CH_2=CF(CF_2)_3H$ or $CH_2=CF(CF_2)_4H$, particularly preferably $CH_2=CH(CF_2)_4F$ (hereinafter sometimes referred to simply as "PFBE") or $CH_2=CH(CF_2)_2F$ (hereinafter sometimes referred to simply as "PFEE")

The fluorinated polymer A may have, in addition to the units (u1) to (u3), units derived from a non-fluorinated monomer (excluding an acid anhydride monomer) (hereinafter sometimes referred to as units (u4)).

The non-fluorinated monomer is preferably a non-fluorinated compound having one polymerizable carbon-carbon double bond, such as an olefin (such as ethylene, propylene or 1-butene) or a vinyl ester (such as vinyl acetate). The non-fluorinated monomer may be used alone or in combination of two or more.

As the non-fluorinated monomer, in view of excellent mechanical strength of the fluorinate resin layer, preferred is ethylene, propylene or 1-butene, particularly preferred is ethylene.

Preferred specific examples of the fluorinated polymer A include a TFE/NAH/PPVE copolymer, a TFE/IAH/PPVE copolymer, a TFE/CAH/PPVE copolymer, a TFE/IAH/HFP copolymer, a TFE/CAH/HFP copolymer, a TFE/IAH/PFBE/ethylene copolymer, a TFE/CAH/PFBE/ethylene copolymer, a TFE/IAH/PFEE/ethylene copolymer, a TFE/CAH/PFEE/ethylene copolymer and a TFE/IAH/HFP/PFBE/ethylene copolymer.

In a case where the fluorinated copolymer A is a copolymer having ethylene units, the preferred proportions of the units (u1), the units (u2), the units (u3) and the units (u4) based on the total amount of these units are respectively as follows.

The proportion of the units (u1) is preferably from 25 to 80 mol%, more preferably from 40 to 65 mol%, further preferably from 45 to 63 mol%.

The proportion of the units (u2) is preferably from 0.01 to 5 mol%, more preferably from 0.03 to 3 mol%, further preferably from 0.05 to 1 mol%.

The proportion of the units (u3) is preferably from 0.2 to 20 mol%, more preferably from 0.5 to 15 mol%, further preferably from 1 to 12 mol%.

The proportion of the units (u4) is preferably from 20 to 75 mol%, more preferably from 35 to 50 mol%, further preferably from 37 to 55 mol%.

In the fluorinated copolymer A having ethylene units, when the proportions of the respective units are within the above ranges, the polymer layer will further be excellent in the flame retardancy, chemical resistance, etc.

When the proportion of the units (u2) is within the above range, the amount of the acid anhydride group in the fluorinated polymer A will be appropriate, and a more excellent adhesion at the interface between the polymer layer and the fiber-reinforced resin layer or the metal layer in the formed product will be achieved.

When the proportion of the units (u3) is within the above range, more excellent forming property of the fluorinated polymer A, flexibility of the polymer layer, etc., will be achieved.

The proportions of the respective units may be calculated e.g. by melt NMR analysis, fluorine content analysis, infrared absorption spectrum analysis, etc., of the fluorinated polymer A.

(Method for producing fluorinated polymer)

The fluorinated polymer may be produced by a conventional method. In a case where the fluorinated polymer is to be produced by polymerization of the monomer, as the polymerization method, preferred is polymerization using a radical polymerization initiator.

The polymerization method may be bulk polymerization, solution polymerization using an organic solvent (such as a fluorinated hydrocarbon, a chlorinated hydrocarbon, a chlorofluorohydrocarbon, an alcohol or a hydrocarbon), suspension polymerization using an aqueous medium and as the case requires, an appropriate organic solvent, or emulsion polymerization using an aqueous medium and an emulsifying agent, and is preferably solution polymerization.

As the radical polymerization initiator, preferred is an initiator such that the temperature at which the half life is 10 hours is from 0 to 100°C, more preferably from 20 to 90°C.

The radical polymerization initiator may, for example, be an azo compound (such as azobisisobutyronitrile), a non-fluorinated diacyl peroxide (such as isobutyryl peroxide, octanoyl peroxide, benzoyl peroxide or lauroyl peroxide), a peroxydicarbonate (such as diisopropyl peroxydicarbonate), a peroxy ester (such as tert-butyl peroxypivalate, tert-butyl peroxyisobutyrate or tert-butyl peroxyacetate), a fluorinated diacyl peroxide (such as a compound represented by $(Z(CF_2)_rCOO)_2$ (wherein Z is a hydrogen atom, a fluorine atom or a chlorine atom, and r is an integer of from 1 to 10)), or an inorganic peroxide (such as potassium persulfate, sodium persulfate or ammonium persulfate).

At the time of polymerization of the monomer, in order to control the melt viscosity of the fluorinated polymer, a chain transfer agent may be used.

The chain transfer agent may, for example, be an alcohol (such as methanol or ethanol), a chlorofluorohydrocarbon (such as 1,3-dichloro-1,1,2,2,3-pentafluoropropane or 1,1-dichloro-1-fluoroethane) or a hydrocarbon (such as pentane, hexane or cyclohexane).

The organic solvent used in solution polymerization may, for example, be a perfluorocarbon, a hydrofluorocarbon, a chlorohydrofluorocarbon or a hydrofluoroether. The number of carbon atoms is preferably from 4 to 12.

The perfluorocarbon may, for example, be specifically perfluorocyclobutane, perfluoropentane, perfluorohexane, perfluorocyclopentane or perfluorocyclohexane.

The hydrofluorocarbon may, for example, be specifically 1-hydroperfluorohexane.

The chlorohydrofluorocarbon may, for example, be specifically 1,3-dichloro-1,1,2,2,3-pentafluoropropane.

The hydrofluoroether may, for example, be specifically methyl perfluorobutyl ether or 2,2,2-trifluroethyl 2,2,1,1-tetrafluoroethyl ether.

The polymerization temperature is preferably from 0 to 100°C, more preferably from 20 to 90°C.

The polymerization pressure is preferably from 0.1 to 10 MPa [gage], more preferably from 0.5 to 3 MPa [gage].

The polymerization time is preferably from 1 to 30 hours.

The polymer layer is not limited to a polymer layer composed of a fluorinated polymer film, and the materials constituting the polymer layer may contain, in addition to the fluorinated polymer, additives, a resin other than the fluorinated polymer, etc., within a range not to impair the effects of the present invention.

The resin other than the fluorinated polymer may, for example, be polyester, polyolefin, a styrene resin, a urethane resin, polyoxymethylene, polyamide, polycarbonate, polymethyl methacrylate, polyvinyl chloride, polyphenylene sulfide, polyphenylene ether, modified polyphenylene ether, polyimide, polyamideimide, polyetherimide, polysulfone, modified polysulfone, polyethersulfone, polyketone, polyether ketone, polyether ether ketone, polyether ketone ketone, polyarylate, polyether nitrile, a phenol resin or a phenoxy resin.

The additive is preferably an inorganic filler.

The inorganic filler may, for example, be silica, clay, talc, calcium carbonate, mica, diatomaceous earth, alumina, zinc oxide, titanium oxide, calcium oxide, magnesium oxide, iron oxide, tin oxide, antimony oxide, calcium hydroxide, magnesium hydroxide, aluminum hydroxide, basic magnesium carbonate, magnesium carbonate, zinc carbonate, barium carbonate, dawsonite, hydrotalcite, calcium sulfate, barium sulfate, calcium silicate, montmorillonite, bentonite, activated clay, sepiolite, Imogolite, sericite, glass fibers, glass beads, silica balloons, carbon black, carbon nanotubes, carbon nanohorns, graphite, carbon fibers, glass balloons, carbon balloons, wood flour or zinc borate. The inorganic filler may be used alone or in combination of two or more.

The inorganic filler may be porous or non-porous.

The inorganic filler may be surface-treated with a surface treatment agent such as a silane coupling agent or a titanate coupling agent, with a view to improving dispersibility in the resin.

(Metal layer)

In a case where the laminated substrate of the present invention has a metal layer, the metal layer is preferably a layer composed of a metal film. The metal layer may also be a layer composed of a film having a metal surface other than the metal film, such as a resin film having a metal plating layer on its surface.

The metal layer is to be laminated with the prepreg layer via the polymer layer having adhesive functional groups on its surface, since no sufficient adhesion to the interface with the fiber-reinforced resin layer will be obtained.

The metal layer may be present as the surface layer of the laminated substrate or may be present as an internal layer of the laminated substrate. The laminated substrate having the metal layer is preferably a laminated substrate of which at least one surface is composed of the metal layer.

The metal may, for example, be iron, stainless steel, aluminum, copper, brass, nickel, zinc, titanium or a metal of such a metal. The type of the metal in the metal layer may suitably be selected depending upon the application of the obtainable formed product. For example, in a case where the formed product is to be used for a printed wiring board of electronic equipment or electric equipment, cupper or a copper alloy, stainless steel, nickel or a nickel alloy (including 42 alloy), aluminum or an aluminum alloy may be mentioned. In a conventional formed product to be used for a printed wiring board of electronic equipment or electric equipment, a copper film such as a rolled cupper foil or an electrolytic copper foil has been widely used, and in the present invention also, it is suitable to use a metal layer composed of a copper film.

On the surface of the metal film, a rust-preventing layer (such as an oxide coating film of e.g. chromate) or a heat resistant layer may be formed. Further, for the purpose of improving the adhesion to the polymer layer, e.g. a treatment with a coupling agent may be applied to the surface of the metal film.

The thickness of the metal film is not particularly limited so long as a sufficient function can be exhibited depending upon the application of the formed product. It is preferably from 1 to 500 $\mu$m, more preferably from 10 to 200 $\mu$m.

(Mechanism of action)

Since the above-described laminated substrate of the present invention has the above specific polymer layer, a formed product excellent in the flame retardancy and chemical resistance can be formed.

Further, the laminated substrate having a polymer layer containing a melt-formable fluorinated polymer, like a conventional laminated substrate having a thermoplastic resin sheet disposed, has improved forming properties. Accordingly, by using the laminated substrate of the present invention, it is possible to produce a formed product having a complicated shape.

Further, since in the above-described laminated substrate of the present invention, the polymer layer has adhesive functional groups in its surface, a formed product excellent in the adhesion at the interface between the fiber-reinforced resin layer and the polymer layer and at the interface between the polymer layer and the metal layer can be formed.

<Method for producing formed product>

The method for producing a formed product of the present invention is characterized by forming the laminated substrate of the present invention with heating.

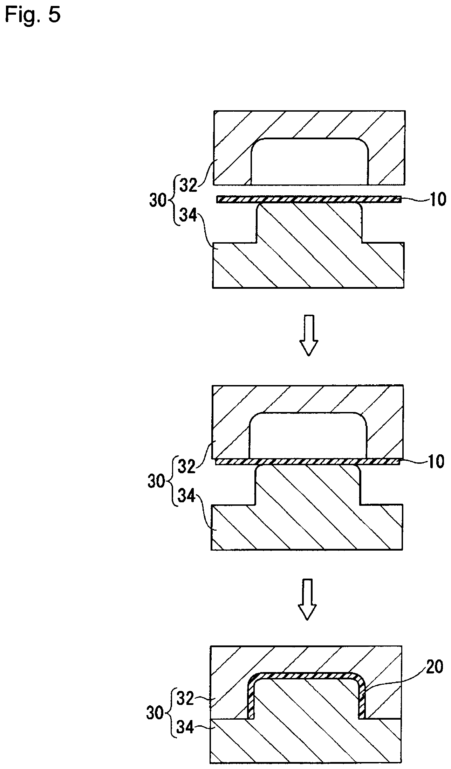

Fig. 5 is a cross sectional view illustrating one example of the method for producing a formed product of the present invention.

As shown in the first stage in Fig. 5, a laminated substrate 10 prepared at anywhere other than dies or one prepared on a lower die 34 is disposed between dies 30 as a pair consisting of an upper die 32 and the lower die 34 to be in contact with the lower die 34.

Then, as shown in the second stage in Fig. 5, the laminated substrate 10 is preheated in a state sandwiched between the upper die 32 and the lower die 34.

Then, as shown in the third stage in Fig. 5, the upper die 32 and the lower die 34 are clamped and the laminated substrate 10 are pressure-formed with heating to obtain a formed product 20 having a shape following the shape of the dies.

The dies as a pair consisting of the upper die and the lower die are to form the laminated substrate into a formed product having a desired shape. Since the laminated substrate of the present invention can be formed into a complicated shape, in the method for producing a formed product of the present invention, dies having a complicated shape may be used.

As dies having a complicated shape, dies having e.g. a concavo-convex shape or a deep drawing shape may be mentioned. In the concavo-convex shape or the deep drawing shape, the corner portion is preferably an R portion having a predetermined curvature radius. The curvature radius of the R portion is preferably from 0.1 to 10 mm, more preferably from 1 to 6 mm, further preferably from 2 to 5 mm, with a view to suppressing disorder of reinforcing fibers and obtaining a formed product having a favorable appearance.

As the material of the dies, a steel stock may be mentioned, and is preferably a cemented carbide having high abrasion resistance. The dies may be subjected to surface treatment (such as surface nitridation treatment) in view of abrasion resistance.

The preheating temperature may, for example, be the same temperature as the temperature at the time of clamping described hereinafter. The preheating temperature and the temperature at the time of clamping are the temperature on the surface of the dies in contact with the laminated substrate.

The preheating time may, for example, be a time until the heat from the dies is sufficiently transported to the polymer layer of the laminated substrate so that the laminated substrate moderately softens.

The temperature at the time of clamping is preferably less than 400°C, preferably at least 100°C and at most 300°C, more preferably at least 100°C and at most 220°C. When the temperature at the time of clamping is at least the lower limit value of the above range, the obtainable formed product will be excellent in the heat resistance. When the temperature at the time of clamping is at most the upper limit value of the above range, a general purpose forming apparatus may be used for producing a formed product, and in a case where the resin matrix is a thermosetting resin, an excellent adhesion at the interface between the polymer layer and the fiber-reinforced resin layer in the formed product will be achieved.

When a fluorinated polymer having a relatively low melting point is used and the resin matrix is a thermosetting resin, even when the temperature at the time of forming the laminated substrate is decreased, an excellent adhesion at the interface between the polymer layer and the fiber-reinforced resin layer in the formed product will be achieved. Accordingly, in a case where the melting point of the fluorinated polymer is at least 120°C and at most 220°C, the temperature at the time of clamping is preferably less than 220°C, and in a case where the melting point of the fluorinated polymer is at least 120°C and at most 200°C, the temperature at the time of clamping is more preferably less than the melting point of the fluorinated polymer.

Even when the temperature at the time of clamping in a case where the melting point of the fluorinated polymer is at least 120°C and at most 200°C, is less than the melting point of the fluorinated polymer, a formed product with a peel strength between the fiber-reinforced resin layer and the polymer layer of at least 5N/cm (preferably at least 7N/cm, more preferably at least 10N/cm) can be obtained.

The pressure at the time of clamping is preferably at most 10 MPa, more preferably at most 6 MPa, further preferably at most 3 MPa with a view to suppressing disorder of the reinforcing fibers and obtaining a formed product having a favorable appearance. The pressure at the time of clamping is preferably at least 0.01 MPa, more preferably at least 0.1 MPa, further preferably at least 0.5 MPa in order that the laminated substrate follows the shape of the dies, and no bubbles remain in the formed product.

The clamping time is, in view of productivity, preferably at most 30 minutes, more preferably at most 15 minutes, further preferably at most 10 minutes. In a case where the resin matrix is a thermosetting resin, the clamping time is, in view of curing properties of the thermosetting resin, preferably at least 5 minutes, more preferably at least 7 minutes, more preferably at least 10 minutes.

(Mechanism of action)

In the above-described method for producing a formed product of the present invention, since the laminated substrate of the present invention is used, a formed product which is excellent in flame retardancy and chemical resistance and which can be formed into a complicated shape can be produced. Further, since the obtainable formed product contains a fluorinated polymer, it has properties (such as water repellency and weather resistance) originating from the fluorinated polymer.

(Application)

As the application of the formed product, for example, the following may be mentioned.
Housing of, an internal member (such as a tray or a chassis), a casing of an internal member, housing of a battery pack, a machinery component, etc. electronic/electric equipment (such as a personal computer, a display, an office automation equipment, a mobile phone, a personal digital assistant, a facsimile, a compact disc, a portable MD, a portable radio cassette player, a PDA (a portable digital assistant such as an electronic organizer), a video camera, a digital still camera, optical equipment, an audio equipment, an air conditioner, lighting equipment, an entertainment item, a toy, and another home electric appliance).

Building materials (such as a panel), etc.

Automobile/two-wheeled vehicle-related components, members and outer plates: a motor member, an alternator terminal, an alternator connector, an IC regulator, a potentiometer base for a light dimmer, a suspension component, valves (such as an exhaust gas valve), pipes of fuel system, exhaust system and intake system, an air-intake nozzle snorkel, an intake manifold, arms, frames, hinges, bearings, a fuel pump, a gasoline tank, a CNG tank, an engine cooling water joint, a carburetor main body, a carburetor spacer, an exhaust gas sensor, a cooling water sensor, an oil temperature sensor, a brake pad wear sensor, a throttle position sensor, a crankshaft position sensor, an airflow meter, a brake pad abrasion sensor, a thermostat base for air conditioning, a flow control value of warm-air heating, a bush holder for radiator motor, a water pump impeller, a turbine vane, a wiper motor related component, a distributor, a starter switch, a starter relay, a wire harness for transmission, a window washer nozzle, an air conditioner panel switch board, a coil for fuel-related electromagnetic valve, a connector for fuse, a battery tray, an AT bracket, a head lamp supporter, a pedal housing, a handle, a door beam, a protector, a chassis, a frame, an arm rest, a horn terminal, a step motor roller, a lamp socket, a lamp reflector, a lamp housing, a brake piston, a noise shield, a radiator support, a spare tire cover, a seat shell, a solenoid bobbin, an engine oil filter, an ignition device case, an undercover, a scuff plate, a pillar trim, a propeller shaft, a wheel, a fender, a fascia, a bumper, a bumper beam, a bonnet, an aero part, a platform, a cowl louver, a roof, an instrument panel, a spoiler, various modules, etc.
Aircraft-related components, members and outer plates: a landing gear pod, a winglet, a spoiler, an edge, a ladder, an elevator, a fairing, a rib, etc.

Others: windmill blades, etc.

The formed product is particularly preferably used for e.g. aircraft members, windmill blades, automobile outer plates and housing, a tray and a chassis of electronic equipment, etc.
The formed product is also used particularly preferably for housing of a battery pack.

EXAMPLES

Now, the present invention will be described in further detail with reference to Examples. However, it should be understood that the present invention is by no means restricted to such specific Examples.

(Proportions of units in polymer)

The proportion of the units in the polymer were obtained by melt NMR analysis, fluorine content analysis and infrared absorption spectrum analysis.
The monomer units are represented by monomer names. Ethylene units are represented as "E".

(Content of adhesive functional groups)

By the following infrared absorption spectrum analysis, the proportion of the acid anhydride monomer units in the fluorinated polymer was obtained.

NAH units:

The fluorinated polymer was press-formed to obtain a 200 μm thickness film. In the infrared absorption spectrum, the absorption peak by NAH units in the fluorinated polymer appears at 1,778 cm$^{-1}$. The absorbance of the absorption peak was measured, and employing the molar absorption coefficient of NAH of 20,810 mol$^{-1}$·l·cm$^{-1}$, the proportion (mol%) of the NAH units was obtained.

Based on the above proportion being a (mol%), the number of acid anhydride groups per $1 \times 10^6$ carbon atoms in the main chain is calculated as $[a \times 10^6/100]$ groups.

IAH units:

In the infrared absorption spectrum, the absorption peak of C=O stretching vibration in the IAH units in the fluorinated polymer appears at 1,870 cm$^{-1}$. In accordance with the relational expression M=a·h/t, the content M (mol%) of the IAH units was calculated. Here, h represents the height of the absorption peak at 1,870 cm$^{-1}$, t represents the thickness of the film (unit: mm), and a represents the coefficient a=0.30, determined taking IAH as a model compound.

(Melting point)

Using a differential scanning calorimeter (DSC apparatus, manufactured by Seiko Instruments Inc.), the melting peak when the polymer was heated at a rate of 10°C/min was recorded, and the temperature (°C) corresponding to the maximum value was taken as the melting point.

(Melt flow rate)

Using a melt indexer (manufactured by TECHNO SEVEN), the mass (g) of the polymer which flowed from a nozzle having a diameter of 2 mm and a length of 8 mm in 10 minutes under the after-mentioned temperature and load conditions, was measured.

(Peel strength)

Interface between fiber-reinforced resin layer and polymer layer:

The formed product was cut to prepare a test specimen having a length of 100 mm and a width of 10 mm. The fiber-reinforced resin layer and the polymer layer were separated to a position of 50 mm from one end in the length direction of the test specimen. Then, taking the position of 50 mm from one end in the length direction of the test specimen as the center, the fiber-reinforced resin layer and the polymer layer were separated 180 degrees at a rate of pulling of 50 mm/min by a tensile tester (manufactured by ORIENTEC CORPORATION), and the maximum load was taken as the peel strength (N/cm). A higher peel strength means more excellent adhesion between the fiber-reinforced resin layer and the polymer layer.

Interface between metal layer and polymer layer:

The formed product was cut to prepare a test specimen having a length of 100 mm and a width of 10 mm. The metal layer and the polymer layer were separated to a position of 50 mm from one end in the length direction of the test specimen. Then, taking the position of 50 mm from one end in the length direction of the test specimen as the center, the metal layer and the polymer layer were separated 90 degrees at a rate of pulling of 50 mm/min by a tensile tester (manufactured by ORIENTEC CORPORATION), and the maximum load was taken as the peel strength (N/cm). A higher peel strength means more excellent adhesion between the metal layer and the polymer layer.

(Burning test)

The formed product was cut to prepare a test specimen having a width of 13 mm, a length of 130 mm and a thickness of 1.5 mm, which was subjected to burning test in accordance with UL94HB. For evaluation, one end in the length direction of the test specimen was burnt, and a lower burning rate from a position of 25 mm from the one end to a position of 100 mm means better results. Further, the best result is that fire naturally burns out.

Fluorinated polymer (1)

A stainless steel polymerization vessel having an internal capacity of 1.3 L equipped with a stirring machine and a jacket was evacuated of air, and 825 g of $CF_3CH_2OCF_2CF_2H$ and 3.2 g of PFBE were charged, and 350 g of HFP, 118 g of TFE and 2.9 g of ethylene were charged while the interior of the polymerization vessel was stirred, and warm water was made to flow through the jacket to increase the internal temperature of the polymerization vessel to 66°C. The pressure in the polymerization vessel was 1.47 MPa [gage]. After the internal temperature was stabilized, 7.4 mL of a 5 mass% $CF_3CH_2OCF_2CF_2H$ solution of tert-butyl peroxypivalate was injected by pressure to initiate polymerization. During the polymerization, a mixed gas of TFE/ethylene=54/46 (molar ratio) was added so that the internal pressure would be constant at 1.47 MPa [gage]. With every consumption of 5 g of the mixed gas of TFE/ethylene (molar ratio) added during the polymerization, 2 mL of a $CF_3CH_2OCF_2CF_2H$ solution containing 7.1 mass% of PFBE and 1.3 mass% of IAH was added. 370 Minutes after the start of the reaction, when 70 g of the mixed gas of TFE/ethylene=54/46 (molar ratio) was added, the polymerization vessel was cooled to terminate the polymerization.

The gas of an unreacted monomer was purged to the atmospheric pressure from the polymerization vessel, the resulting slurry was put into a container having an internal capacity of 2 L, and water in the same volume as the slurry was added. The polymerization medium and the unreacted monomer were separated from the polymer with heating (from 20 to 73°C). The obtained polymer was dried in an oven at 120°C to obtain fluorinated polymer (1) in a white powder form.

The proportion of the respective units in the fluorinated polymer (1) was such that TFE/IAH/HFP/PFBE/E=47.5/0.3/8.3/0.6/43.4 mol%, and the content of adhesive functional groups was 1,504 groups per $1 \times 10^6$ carbon atoms in the main chain. The melting point of the fluorinated polymer (1) was 183°C, and the melt flow rate at 235°C under a load of 21N was 4.0 g/10 min.

Fluorinated polymer (2)

Fluorinated polymer (2) was prepared in the same manner as in Example 1 of WO2015/182702. The proportion of the respective units in the fluorinated polymer (2) was such that TFE/IAH/PFBE/E=58.5/0.1/2.4/39 mol%, the content of adhesive functional groups was 3,000 groups per $1 \times 10^6$ carbon atoms in the main chain, the melting point was 245°C, and the melt flow rate at 297°C under a load of 49N was 22 g/10 min.

Fluorinated polymer (3)

Fluorinated polymer (3) was prepared in the same manner as in WO2016/017801, paragraph [0124]. The proportion of the respective units in the fluorinated polymer (3) was such that TFE/NAH/PPVE=97.9/0.1/2.0 mol%, the content of adhesive functional groups in the fluorinated polymer (3) was 1,000 groups per $1 \times 10^6$ carbon atoms in the main chain, the melting point was 300°C, and the melt flow rate at 372°C under a load of 49N was 17.6 g/10 min.

Fluorinated polymer (4)

As fluorinated polymer (4), commercially available ETFE having no adhesive functional groups was used. The proportion of units in the fluorinated polymer (4) was such that TFE/PFBE/E=60/3.3/40 (molar ratio), the melting point was 225°C, and the melt flow rate at 297°C under a load of 49N is 25 g/10 min.

Further as fluorinated polymer (5), commercially available PFA having no adhesive functional groups was used. The proportion of units in the fluorinated polymer (5) was such that TFE/PPVE=98.5/1.5 (molar ratio), the melting point was 310°C, and the melt flow rate at 372°C under a load of 49N is 12.0 g/10 min.

Polymer film (1)
The fluorinated polymer (1) was extruded using a single screw extruder of 300 mm in diameter having a coat hanger die having a width of 750 mm, at a die temperature of 220°C to obtain polymer film (1) having a thickness of 100 $\mu$m. Using the same single screw extruder as above, the following films were produced.
Polymer film (2): a film having a thickness of 100 $\mu$m obtained by extruding the fluorinated polymer (4) at a die temperature of 300°C.
Polymer film (3): a film having a thickness of 100 $\mu$m obtained by extruding the fluorinated polymer (2) at a die temperature of 280°C.
Polymer film (4): a film having a thickness of 100 $\mu$m obtained by extruding the fluorinated polymer (3) at a die temperature of 340°C.
Polymer film (5): a film having a thickness of 100 $\mu$m obtained by extruding the fluorinated polymer (5) at a die temperature of 340°C.

Polymer film (6)
The both surfaces of the polymer film (2) were surface-treated using a capacitively coupled electrode method continuous treatment apparatus. So-called gliding arc discharge was generated under conditions of pulse modulated alternating high voltage (20 kHz, 24 kV), and by this discharge, atmospheric pressure low temperature plasma (temperature of at most 80°C) was applied to the surface of the polymer film (2) conveyed on conveying equipment (conveyer) to conduct surface treatment thereby to obtain polymer film (6). Carbonyl groups in the surface were measured by ATR-IR, whereupon a broad absorption peak attributable to carbonyl groups was confirmed at 1,790 cm$^{-1}$. The amount of the functional groups introduced was 0.21 by the absorption peak ratio relative to the peak height of CH stretching peak at 1,450 cm$^{-1}$ obtained in accordance with the following formula.

$$\text{Absorption peak ratio} = \log (\text{peak height at 1,790 cm}^{-1})/\log (\text{peak height at 1,450 cm}^{-1})$$

Polymer film (7)
The both surfaces of the polymer film (2) were surface-treated using a capacitively coupled electrode method continuous treatment apparatus. In the same manner as production of the polymer film (6), while the surface treatment was carried out, an argon gas containing acrylic acid was supplied to the upstream side of the system, and by plasma graft polymerization treatment, polymer film (7) was obtained. Carbonyl groups in the surface were measured by ATR-IR, whereupon a sharp absorption peak attributable to carbonyl groups which are considered to be derived from acrylic acid was confirmed at 1,785 cm$^{-1}$. The amount of the functional groups introduced was 0.15 by the above absorption peak ratio.
The following films were obtained in the same manner as the production of the polymer film (7) except that the monomer for graft polymerization was change to other monomer.
Polymer film (8): a film having amide groups in its surface obtained by using acrylamide.
Polymer film (9): a film having epoxy groups in its surface obtained by using glycidyl methacrylate.
Polymer film (10): a film having amino groups in its surface obtained by using acrylamine.

As a prepreg, the following commercial prepregs were used.

Prepreg (P-1): manufactured by Mitsubishi Rayon Co., Ltd., TR3110 381GMX (thickness: 223 μm, reinforcing fibers: carbon fibers, resin matrix: thermosetting resin)
Prepreg (P-2): manufactured by ICHIMURA SANGYO CO., LTD. (thickness: 270 μm, reinforcing fibers: carbon fibers, resin matrix: polyamide 6)
Prepreg (P-3): manufactured by ICHIMURA SANGYO CO., LTD.(thickness: 280 μm, reinforcing fibers: carbon fibers, resin matrix: polyphenylene sulfide)

As a metal film, the following commercial metal films were used.

Metal film (1): electrolytic copper foil manufactured by FUKUDA METAL FOIL & POWDER CO., LTD., CF-T4X-SVR-12 (thickness: 12 μm, surface roughness (Rz): 1.2 μm)
Metal film (2): titanium foil manufactured by The Nilaco Corporation, TI-453262 (thickness: 50 μm)

(Ex. 1-1)

A laminated substrate having the polymer film (1) and the prepreg (P-1) laminate was heated under pressure using a heating press (manufactured by TESTER SANGYO CO., LTD.) at a pressing temperature of 150°C for a pressing time of 10 minutes under a contact pressure of 4.8 MPa to obtain a formed product. The results are shown in Table 1.

(Ex. 1-2)

A formed product was obtained in the same manner as in Ex. 1-1 except that the pressing temperature was 180°C. The results are shown in Table 1.

(Ex. 1-3)

A formed product was obtained in the same manner as in Ex. 1-1 except that the pressing temperature was 200°C. The results are shown in Table 1.

(Ex. 1-4)

A formed product was obtained in the same manner as in Ex. 1-1 except that the pressing temperature was 220°C. The results are shown in Table 1.

(Ex. 1-5)

A laminated substrate having the metal film (1), the polymer film (1) and the prepreg (P-1) laminated in this order was vacuum-pressed at a temperature of 220°C under a pressure of 3 MPa for 60 minutes to obtain a formed product. The results are shown in Table 1.

(Ex. 1-6)

A formed product was obtained in the same manner as in Ex. 1 except that the polymer film (2) was used instead of the polymer film (1). Since the fiber-reinforced resin layer and the polymer layer were not bonded, the peel strength could not be measured. The results are shown in Table 1.

(Ex. 1-7)

A formed product was obtained in the same manner as in Ex. 1-6 except that the pressing temperature was 220°C. The results are shown in Table 1.

(Ex. 1-8)

A formed product was obtained in the same manner as in Ex. 1-6 except that the pressing temperature was 240°C. The results are shown in Table 1.

(Ex. 1-9)

A formed product was obtained in the same manner as in Ex. 1-5 except that the metal film (2) was used instead of the metal film (1). The results are shown in Table 1.

(Ex. 1-10)

A formed product was obtained in the same manner as in Ex. 1-2 except that the polymer film (6) was used instead of the polymer film (1). The results are shown in Table 1.

(Ex. 1-11)

A formed product was obtained in the same manner as in Ex. 1-5 except that the polymer film (6) was used instead of the polymer film (1) and that the pressing temperature was 180°C. The results are shown in Table 1.

(Ex. 1-12)

A formed product was obtained in the same manner as in Ex. 1-2 except that the polymer film (7) was used instead of the polymer film (1). The results are shown in Table 1.

(Ex. 1-13)

A formed product was obtained in the same manner as in Ex. 1-5 except that the polymer film (7) was used instead of the polymer film (1), and that the pressing temperature was 180°C. The results are shown in Table 1.

(Ex. 1-14)

A formed product was obtained in the same manner as in Ex. 1-2 except that the polymer film (8) was used instead of the polymer film (1). The results are shown in Table 1.

(Ex. 1-15)

A formed product was obtained in the same manner as in Ex. 1-2 except that the polymer film (9) was used instead of the polymer film (1). The results are shown in Table 1.

(Ex. 1-16)

A formed product was obtained in the same manner as in Ex. 1-2 except that the polymer film (10) was used instead of the polymer film (1). The results are shown in Table 1.

[Table 1]

|  | Prepreg | Polymer film | Metal film | Pressing temperature [°C] | Peel strength [N/cm] | |
|---|---|---|---|---|---|---|
|  |  |  |  |  | Fiber-reinforced resin layer / polymer layer | Metal layer / polymer layer |
| Ex. 1-1 | (P-1) | (1) | - | 150 | 7.0 | - |
| Ex. 1-2 | (P-1) | (1) | - | 180 | 12 | - |
| Ex. 1-3 | (P-1) | (1) | - | 200 | 15.7 | - |
| Ex. 1-4 | (P-1) | (1) | - | 220 | 18.6 | - |
| Ex. 1-5 | (P-1) | (1) | (1) | 220 | - | 11 |
| Ex. 1-6 | (P-1) | (2) | - | 150 | Not bonded | - |
| Ex. 1-7 | (P-1) | (2) | - | 220 | 1.0 | - |
| Ex. 1-8 | (P-1) | (2) | - | 240 | 3.3 | - |
| Ex. 1-9 | (P-1) | (1) | (2) | 220 | 17.6 | 12 |
| Ex. 1-10 | (P-1) | (6) | - | 180 | 11 | - |
| Ex. 1-11 | (P-1) | (6) | (1) | 180 | - | 11 |
| Ex. 1-12 | (P-1) | (7) | - | 180 | 15 | - |
| Ex. 1-13 | (P-1) | (7) | (1) | 180 | - | 25 |
| Ex. 1-14 | (P-1) | (8) | - | 180 | 10 | - |
| Ex. 1-15 | (P-1) | (9) | - | 180 | 12 | - |
| Ex. 1-16 | (P-1) | (10) | - | 180 | 10 | - |

The formed product in each of Ex. 1-1 to 1-5 and 1-9 having a polymer layer containing a fluorinated polymer having adhesive functional groups is excellent in the adhesion at the interface between the fiber-reinforced resin layer and the polymer layer and at the interface between the polymer layer and the metal layer. Further, the formed product in each of Ex. 1-10 to 1-16 obtained by using a film formed by applying plasma treatment or plasma graft polymerization treatment to a film of a fluorinated polymer having no adhesive functional groups, is excellent in the adhesion at the interface between the fiber-reinforced resin layer and the polymer layer and at the interface between the polymer layer and the metal layer.

Whereas the formed product in each of Ex. 1-6 to 1-8 having a polymer layer containing a fluorinated polymer having no adhesive functional groups, is insufficient in the adhesion at the interface between the fiber-reinforced resin layer and the polymer layer.

(Ex. 2-1)

A laminated substrate having the polymer film (1) and the prepreg (P-2) laminated was heated under pressure using a heating press (manufactured by TESTER SANGYO CO., LTD.) at a pressing temperature of 240°C for a pressing time of 10 minutes under a contact pressure of 3.0 MPa to obtain a formed product. The results are shown in Table 2.

(Ex. 2-2 to 2-9)

A formed product was obtained in the same manner as in Ex. 2-1 except that a polymer film and a prepreg as identified in Table 2 were used, and that the pressing conditions were as identified in Table 2. The results are shown in Table 2.

In Ex. 2-5 and 2-6, 6 sheets of the prepreg (P-2) were laminated, and the pressing was conducted under conditions as identified in Table 2.

In Table 2, ">20" means that since the polymer film was broken at the time of peeling if the peel strength exceeded 20N/cm, peel strength could not be measured any more.

[Table 2]

| | Prepreg | Polymer film | Pressing temperature [°C] | Peel strength [N/cm] |
|---|---|---|---|---|
| Ex. 2-1 | (P-2) | (1) | 240 | >20 |
| Ex. 2-2 | (P-3) | (2) | 280 | Not bonded |
| Ex. 2-3 | (P-3) | (3) | 300 | >20 |
| Ex. 2-4 | (P-3) | (4) | 340 | >20 |
| Ex. 2-5 | 6 Sheets of (P-2) laminated | (1) | 240 | >20 |
| Ex. 2-6 | 6 Sheets of (P-2) laminated | (3) | 260 | >20 |
| Ex. 2-7 | (P-2) | (3) | 260 | >20 |
| Ex. 2-8 | (P-2) | (3) | 250 | >20 |
| Ex. 2-9 | (P-3) | (5) | 340 | Not bonded |

(Ex. 3-1)

Six sheets of the prepreg (P-2) and two sheets of the polymer film (1) were prepared. The polymer films (1) were disposed on both sides of the laminate comprising 6 sheets of the prepreg (P-2) to sandwich the laminate, and the resulting laminated substrate was set to dies using a spacer having a thickness of 1.5 mm, and heated under pressure using a heating press (manufactured by TESTER SANGYO CO., LTD.) at a pressing temperature of 240°C for a pressing time of 10 minutes under a contact pressure of 3.0 MPa to obtain a formed product. A test specimen was prepared from the formed product and subjected to the burning test. The results are shown in Table 3.

(Ex. 3-2)

In the same manner as in Ex. 3-1 except that the polymer film was as identified in Table 3 and that the pressing conditions were as identified in Table 3, a formed product and a test specimen were obtained, and the burning test was conducted. The results are shown in Table 3.

(Ex. 3-3)

In the same manner as in Ex. 3-1 except that no polymer film was used, a formed product and a test specimen were obtained, and the burning test was conducted. The results are shown in Table 3.

[Table 3]

|  | Polymer film | Prepreg | Polymer film | Pressing temperature [°C] | Burning rate [mm/min] |
|---|---|---|---|---|---|
| Ex. 3-1 | (1) | 6 Sheets of (P-2) laminated | (1) | 240 | Fire naturally burned out |
| Ex. 3-2 | (3) | 6 Sheets of (P-2) laminated | (3) | 260 | Fire naturally burned out |
| Ex. 3-3 | - | 6 Sheets of (P-2) laminated | - | 240 | 12 |

As shown in Table 2, the fiber-reinforced resin layer containing a thermoplastic resin also had high adhesion to the polymer layer containing a fluorinated polymer having adhesive functional groups.
Further, as shown in Table 3, by using a film of a fluorinated polymer having adhesive functional groups, the formed product showed high flame retardancy.

INDUSTRIAL APPLICABILITY

The formed product obtained by the production method of the present invention is useful as a member constituting e.g. transport equipment (such as vehicles (such as automobiles and railway vehicles) and aircraft), building, electric/electronic equipment, etc.
The entire disclosures of Japanese Patent Application No. 2015-162453 filed on August 20, 2015, Japanese Patent Application No. 2016-062561 filed on March 25, 2016 and Japanese Patent Application No. 2016-121231 filed on June 17, 2016 including specifications, claims, drawings and summaries are incorporated herein by reference in their entireties.

REFERENCE SYMBOLS

10: Laminated substrate, 10a: laminated substrate, 10b: laminated substrate, 10c: laminated substrate, 10d: laminated substrate, 12: prepreg layer, 14: fluorinated resin layer, 16: metal foil layer, 20: fiber-reinforced composite material, 30: die, 32: upper die, 34: lower die.

**Claims**

1.    A laminated substrate comprising at least one prepreg layer containing a reinforcing fiber sheet and a resin matrix, and at least one polymer layer containing a fluorinated polymer, wherein at least one interface where the prepreg layer and the polymer layer are in contact with each other is present, and adhesive functional groups are present in the surface of the polymer layer at the interface.

2.    The laminated substrate according to Claim 1, wherein the polymer layer contains a fluorinated polymer having an adhesive functional group.

3.    The laminated substrate according to Claim 2, wherein the fluorinated polymer having an adhesive functional group is a fluorinated polymer having at least one type of functional groups selected from the group consisting of carbonyl group-containing groups, hydroxy groups, epoxy groups, amide groups, amino groups and isocyanate groups.

4.    The laminated substrate according to Claim 1, wherein the polymer layer is composed of a film of a fluorinated polymer having an adhesive functional group introduced to its surface.

5.    The laminated substrate according to Claim 4, wherein the film is a film having the adhesive functional groups introduced by applying a plasma treatment or a plasma graft polymerization treatment to the film surface.

6.  The laminated substrate according to any one of Claims 1 to 5, wherein the laminated substrate further has at least one metal layer, at least one interface where the metal layer and the polymer layer are in contact with each other is present, and the adhesive functional group is present in the surface of the polymer layer at the interface where the metal layer and the polymer layer are in contact with each other.

7.  The laminated substrate according to Claim 6, wherein at least one surface of the laminated substrate is composed of a metal layer.

8.  The laminated substrate according to any one of Claims 1 to 7, wherein the fluorinated polymer has a melting point, and the melting point is from 100 to 325°C.

9.  The laminated substrate according to any one of Claims 1 to 8, wherein the polymer layer has a thickness of at least 10 $\mu$m.

10. The laminated substrate according to any one of Claims 1 to 9, wherein the resin matrix is a resin matrix containing an uncured curable resin.

11. The laminated substrate according to any one of Claims 1 to 9, wherein the resin matrix is a resin matrix containing a thermoplastic resin.

12. A method for producing a formed product, which comprises forming the laminated substrate as defined in any one of Claims 1 to 11 with heating.

13. The production method according to Claim 12, wherein the laminated substrate has a polymer layer containing a fluorinated polymer having adhesive functional groups, and the forming temperature is at least the melting point of the fluorinated polymer and in a case where the resin matrix contains an uncured curable resin, at least the curing temperature of the curable resin.

14. The production method according to Claim 12, wherein the laminated substrate has a polymer layer composed of a film of a fluorinated polymer having adhesive functional groups introduced to its surface, and the forming temperature is less than the melting point of the fluorinated polymer and in a case where the resin matrix contains an uncured curable resin, at least the curing temperature of the curable resin.

15. The production method according to any one of Claims 12 to 14, wherein the peel strength at the interface between a fiber-reinforced resin layer derived from the prepreg layer and the polymer layer in the formed product is at least 5N/cm.

Fig. 1

10a

14

12

Fig. 2

10b

12

14

12

Fig. 3

10c

12
14
12
14
12
14
12

Fig. 4

10d

16
14
12

Fig. 5

## INTERNATIONAL SEARCH REPORT

| | International application No. |
|---|---|
| | PCT/JP2016/074239 |

**A. CLASSIFICATION OF SUBJECT MATTER**

*B32B5/28*(2006.01)i, *B29C43/20*(2006.01)i, *B29C43/34*(2006.01)i, *B32B15/08* (2006.01)i, *B32B37/06*(2006.01)i, *B29K27/12*(2006.01)n, *B29K105/08* (2006.01)n, *B29L9/00*(2006.01)n

According to International Patent Classification (IPC) or to both national classification and IPC

**B. FIELDS SEARCHED**

Minimum documentation searched (classification system followed by classification symbols)

B32B1/00-43/00, B29C43/20, B29C43/34, B29C70/00, B29K27/12, B29K105/08, B29L9/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 6-344503 A (Nippon Pillar Packing Co., Ltd.), 20 December 1994 (20.12.1994), claims; paragraphs [0001], [0009], [0014], [0020], [0028] to [0053], [0069] to [0078]; fig. 1, 3, 12 (Family: none) | 1-15 |
| Y | JP 2001-328205 A (Nippon Pillar Packing Co., Ltd.), 27 November 2001 (27.11.2001), claims; paragraphs [0001], [0011] to [0045] (Family: none) | 1-9,11-13,15 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 October 2016 (19.10.16) | 01 November 2016 (01.11.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

| International application No. |
|---|
| PCT/JP2016/074239 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-181770 A (Toho Kasei Co., Ltd.), 02 July 2004 (02.07.2004), claims; paragraphs [0001] to [0002], [0006] to [0024] (Family: none) | 1-13,15 |
| Y | WO 2006/062138 A1 (Asahi Glass Co., Ltd.), 15 June 2006 (15.06.2006), paragraphs [0033], [0046] to [0061] & US 2007/0246255 A1 paragraphs [0036], [0050] to [0065] & JP 5286669 B      & EP 1820637 A1 & DE 602005027242 D    & CN 101090817 A & KR 10-2007-0085912 A | 1-15 |
| Y | JP 2005-14598 A (Mitsubishi Plastics, Inc.), 20 January 2005 (20.01.2005), paragraphs [0005] to [0009], [0042] to [0047], [0053], [0063] to [0064] & WO 2005/115751 A1     & CN 1960866 A & KR 10-2007-0034527 A | 1-15 |
| Y | JP 2003-273630 A (Daikin Industries, Ltd.), 26 September 2003 (26.09.2003), claims (claims 1, 12); paragraphs [0019] to [0025], [0072] to [0074], [0077], [0078] (Family: none) | 1-15 |
| Y | JP 2009-13310 A (Nippon Valqua Industries, Ltd.), 22 January 2009 (22.01.2009), claims; paragraphs [0002] to [0026], table 1 (Family: none) | 1-15 |
| Y | JP 62-132940 A (Sumitomo Electric Industries, Ltd.), 16 June 1987 (16.06.1987), page 2, upper right column, line 10 to lower right column, line 4; page 3, upper right column, line 1 to lower left column, 9th line from the bottom (Family: none) | 1-15 |
| A | JP 2010-260216 A (Nippon Valqua Industries, Ltd.), 18 November 2010 (18.11.2010), entire text; all drawings & WO 2010/125996 A1     & TW 201041741 A | 1-15 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6134903 A
- JP 2008230236 A
- JP 2007314720 A
- JP 5078539 A
- JP 11124482 A
- JP 2006089720 A
- JP 11193312 A
- WO 2015182702 A
- WO 2016017801 A
- JP 2015162453 A
- JP 2016062561 A
- JP 2016121231 A